# EUROPÄISCHE PATENTANMELDUNG

(11) **EP 3 798 752 A1**
(43) Veröffentlichungstag der Anmeldung: **31.03.2021**
(21) Anmeldenummer: 19200005.7
(22) Anmeldetag: 27.09.2019
(51) Int. Cl.: G05B 19/042

(54) **VERFAHREN UND PROJEKTIERUNGSSYSTEM ZUR COMPUTERGESTÜTZTEN PROJEKTIERUNG EINER KOMMUNIKATIONSBEZIEHUNG ZWISCHEN ZWEI KOMPONENTEN EINER INDUSTRIELLEN AUTOMATISIERUNGSANORDNUNG**

(71) Anmelder: Siemens Aktiengesellschaft, 80333 München (DE)
(72) Erfinder: Bergner, Bernd, 91336 Heroldsbach (DE); Biehler, Georg, 90453 Nürnberg (DE); Heller, Matthias, 90475 Nürnberg (DE); Heller, Rainer, 90542 Eckental (DE); Lange, Ronald, 90766 Fürth (DE); Pfahlmann, Lothar, 91083 Baiersdorf (DE); Rupprecht, Georg, 90409 Nürnberg (DE)

(57) **Zusammenfassung**

Verfahren und Projektierungssystem zur computergestützten Projektierung einer Kommunikationsbeziehung zwischen mindestens zwei Komponenten einer industriellen Automatisierungsanordnung. D ie bei einem Datenaustausch miteinander zu verknüpfenden Komponenten (Robot_1, Robot_2, Machine_1, Machine_2, Loader) und die datentechnischen Elemente der Kommunikationsbeziehung werden festgelegt.

In einem ersten Schritt wird ein Kommunikationsinterface eines Typs mit den für die Kommunikation vorgesehenen Elementen festgelegt, wobei das Kommunikationsinterface diesen Typs eine erste Gruppe Elemente und/oder eine zweite Gruppe Elemente umfasst.

In einem zweiten Schritt für wird jede der Komponenten Robot_1, Robot_2, Machine_1, Machine_2, Loader) jeweils die erste oder die zweite Gruppe Elemente des Kommunikationsinterfaces instanziiert.

In einem dritten Schritt werden jeweils Elemente der ersten Gruppe des Kommunikationsinterfaces einer ersten der zwei Komponenten Robot_1, Robot_2, Machine_1, Machine_2, Loader) mit korrespondierenden Elementen der zweiten Gruppe des Kommunikationsinterfaces desselben Typs einer zweiten der Komponenten Robot_1, Robot_2, Machine_1, Machine_2, Loader) verknüpft.

Somit kann ist der semantische Kontrakt zwischen den Kommunikationspartnern bzw. Komponenten (Robot_1, Robot_2, Machine_1, Machine_2, Loader) bei der Instanziierung der einzelnen Teile oder Gruppen des Kommunikationsinterfaces bekannt und kann systemgestützt zur Projektierung der Kommunikationsbeziehungen ausgewertet werden.

## Beschreibung

Die Erfindung betrifft ein Verfahren zur computergestützten Projektierung einer Kommunikationsbeziehung gemäß dem Oberbegriff des Patentanspruchs 1, und ein Projektierungssystem zur computergestützten Projektierung einer Kommunikationsbeziehung gemäß dem Oberbegriff des Patentanspruchs 16.

In industriellen Automatisierungsanordnungen werden typischerweise viele computergesteuerte Komponenten, beispielsweise speicherprogrammierbare Steuerungen, Maschinen, Roboter, Fördermittel, Bedienstationen oder dergleichen betrieben, die regelmäßig Daten miteinander austauschen. Für den Datenaustausch müssen zwischen den einzelnen Komponenten Kommunikationsbeziehungen geplant und parametriert werden, wobei dieser Vorgang gebräuchlicher Weise als "Projektierung" bezeichnet wird.

Mit zunehmender Anzahl und mit zunehmender Funktionalität der miteinander zu verschaltenden Komponenten wird auch die Projektierung der Kommunikationsbeziehungen wegen der gegenseitigen Abhängigkeiten zunehmend komplexer. Man versucht daher klassischerweise, die komplette Projektierung der Kommunikationsbeziehungen im Vorfeld zu erledigen, d.h., bevor eine industrielle Automatisierungsanordnung tatsächlich aufgebaut und in Betrieb genommen wird.

Dieser Ansatz wird dann schwierig, wenn detaillierte Informationen (Art, Anzahl, Topologie) über die an einer Kommunikationsbeziehung beteiligten Komponenten zu diesem frühen Zeitpunkt noch nicht vorliegen oder wenn Komponenten während des Betriebs ausgetauscht, entfernt oder hinzugefügt werden müssen. Eine weitere Problematik entsteht dann, wenn eine Produktionseinrichtung oder allgemein eine Automatisierungsanordnung modular oder flexibel aufgebaut sein soll, wenn sich also die Topologie und Anordnung der Komponenten ändern kann und somit die Kommunikationsbeziehungen ebenfalls neu gestaltet werden müssen.

Beispielsweise bei Anwendungen für verkettete Werkzeugmaschinen müssen die Kommunikationsbeziehungen zwischen den Maschinen bzw. zu überlagerten Einheiten, wie beispielsweise einem Ladeportal bzw. Zuführeinrichtungen (wie Roboter) projektiert werden, wobei diese Kommunikationsprojektierung in solchen Fällen oft erst nachgelagert erfolgen kann, d.h. zu einem Zeitpunkt, zu dem einzelne Maschinen/ Einheiten/ ... bereits in Betrieb genommen worden sind.

Für die Projektierung von Kommunikationsbeziehungen als solche sind bereits Verfahren verfügbar, beispielsweise Component-Based-Automation (CBA) oder OPC/UA PUB-SUB. Bei den bekannten Verfahren ist jedoch keine systemgestützte Verschaltung möglich, da a priori keine Informationen über die Zusammengehörigkeit der Verschaltungspartner vorhanden sind. Es kann also höchstens eine Unterstützung der Projektierung der Kommunikationsbeziehungen auf Einzelelementebene gegeben werden, indem beispielsweise ein System (Projektierungssystem) die Kompatibilität von Datentypen prüft. Ebenso kann über eine Namenskonvention Hinweise darauf gegeben werden, wie eine Projektierung einer Kommunikationsbeziehung erfolgen kann, diese Namenskonventionen können aber in der Regel nicht systemgestützt ausgewertet werden, sodass diese Unterstützung lediglich bei einer manuellen Projektierung hilfreich ist.

Es ist also eine Aufgabe der vorliegenden Erfindung, einen Anwender systemgestützt bei der Erstellung bzw. Projektierung von Kommunikationsbeziehungen zu unterstützen, wobei idealerweise die Kommunikationsbeziehungen vollständig automatisch hergestellt werden sollen (Auto-Connect bzw. Plug-and-Play). Es ist eine Kernidee der erfindungsgemäßen Lösung dieser Aufgabe, dass für die Kommunikationsbeziehungen der Komponenten Interfacetypen definiert werden, sodass bereits im Vorfeld vor der eigentlichen Verschaltung der Komponenten die notwendigen Informationen festgelegt sind. Dies bedeutet, dass vor der eigentlichen Verknüpfung der Komponenten miteinander die in der Kommunikationsbeziehung miteinander zu verschaltenden Elemente, Datentypen, Protokolle festgelegt sind, um eine teil- oder vollautomatische Projektierung der Kommunikationsbeziehung zu gestatten. Erfindungsgemäß enthält ein Interfacetyp sowohl einen ersten und einen zweiten Teil (auch erste oder zweite Gruppe von Elementen genannt), beispielsweise einen sog. Initiator- und einen sog. Responder-Anteil. Erfindungsgemäß wird ein Initiator-Teil eines Interfaces einer Komponente immer mit einem Responder-Anteil eines typgleichen Interfaces einer anderen Komponente miteinander verschaltet. Das heißt mit anderen Worten, dass ein erster Teil eines Interfaces auf einer ersten Komponente instanziiert wird, und der andere, zweite Teil auf einer zweiten Komponente. Es können auch beide Teile auf einer Komponente instanziiert werden, beispielsweise wenn eine Komponente mehr als eine Kommunikationsbeziehung haben soll. Anhand des Typs des Interfaces kann darüber hinaus erfindungsgemäß auch ein passender Kommunikationspartner in einem Netzwerk aufgefunden werden, indem zu einem instanziierten ersten Teil eines Kommunikationsinterfaces im Netzwerk nach einem Partner, also einer weiteren Komponente, mit einem instanziierten zweiten Teil des Kommunikationsinterfaces desselben Typs gesucht wird. Damit kann die Projektierung von Kommunikationsbeziehungen weiter automatisiert werden, weil der bislang manuelle Schritt der Festlegung der Kommunikationsbeziehungen damit vereinfacht wird oder sogar komplett automatisiert werden kann.

Die Aufgabe wird insbesondere durch ein Verfahren gemäß Patentanspruch 1 und durch ein Projektierungssystem nach Patentanspruch 16 gelöst.

Die Lösung sieht dabei ein Verfahren zur computergestützten Projektierung einer Kommunikationsbeziehung zwischen zwei Komponenten einer industriellen Automatisierungsanordnung vor, wobei mit der Projektierung die bei einem Datenaustausch miteinander zu verknüpfenden Komponenten und die datentechnischen Elemente der Kommunikationsbeziehung festgelegt werden. Dabei ist vorgesehen, dass in einem ersten Schritt zumindest ein Kommunikationsinterface eines Typs mit den für die Kommunikation vorgesehenen Elementen festgelegt wird, wobei das Kommunikationsinterface diesen Typs eine erste Gruppe Elemente für erste Funktionen umfasst, und/oder wobei das Kommunikationsinterface diesen Typs eine zweite Gruppe Elemente für zweite Funktionen umfasst, dass in einem zweiten Schritt für mindestens zwei Komponenten jeweils zumindest die erste oder die zweite Gruppe Elemente des Kommunikationsinterfaces instanziiert wird, und dass in einem dritten Schritt jeweils Elemente der ersten Gruppe des Kommunikationsinterfaces einer ersten der zwei Komponenten mit korrespondierenden Elementen der zweiten Gruppe des Kommunikationsinterfaces desselben Typs einer zweiten der Komponenten verknüpft werden. Durch dieses Verfahren ist es möglich, dass bereits bei der Instanziierung der einzelnen Teile oder Gruppen des Kommunikationsinterfaces der semantische Kontrakt zwischen den Kommunikationspartnern bzw. Komponenten bekannt ist und systemgestützt zur Projektierung der Kommunikationsbeziehungen ausgewertet werden kann.

Die Aufgabe wird außerdem durch ein Projektierungssystem zur computergestützten Projektierung einer Kommunikationsbeziehung zwischen zumindest zwei Komponenten einer industriellen Automatisierungsanordnung gelöst, wobei das Projektierungssystem zur Festlegung der bei einem Datenaustausch miteinander zu verknüpfenden datentechnischen Elemente der Kommunikationsbeziehung eingerichtet ist. Dabei ist das Projektierungssystem erfindungsgemäß derart eingerichtet, dass in einem ersten Schritt zumindest ein Kommunikationsinterface eines Typs mit den für die Kommunikation vorgesehenen Elementen festgelegt wird, wobei das Kommunikationsinterface diesen Typs eine erste Gruppe Elemente für erste Funktionen der Komponente umfasst, und/oder wobei das Kommunikationsinterface diesen Typs eine zweite Gruppe Elemente für zweite Funktionen umfasst, dass in einem zweiten Schritt für mindestens zwei Komponenten jeweils zumindest die erste oder die zweite Gruppe Elemente des Kommunikationsinterfaces instanziiert wird, und dass in einem dritten Schritt jeweils Elemente der ersten Gruppe des Kommunikationsinterfaces einer ersten der zwei Komponenten mit korrespondierenden Elementen der zweiten Gruppe des Kommunikationsinterfaces desselben Typs einer zweiten der Komponenten verknüpft werden. Durch ein solches Projektierungssystem können die bereits anhand des Verfahrens erläuterten Vorteile realisiert werden.

Vorteilhafte Ausgestaltungen des erfindungsgemäßen Verfahrens sind in den abhängigen Patentansprüchen angegeben. Die dabei beschriebenen Merkmale und Vorteile gelten sinngemäß auch für das erfindungsgemäße Projektierungssystem. Die geschilderten Merkmale können dabei sowohl einzeln als auch in sinnfälliger Kombination miteinander realisiert sein.

Die Funktion der ersten Gruppe der Elemente oder - gleichbedeutend - des ersten Teils des Kommunikationsinterfaces kann sich im einfachen Fall darauf beschränken, ein Auffinden oder eine Zuordnung von zueinander "passenden" Komponenten zu erleichtern und vorteilhaft auch die Verschaltung der Elemente innerhalb einer Kommunikationsbeziehung zu definieren. In einer vorteilhaften Ausgestaltung kann die erste Funktion der Komponente eine Funktionalität als Initiator der Kommunikationsbeziehung umfassen. Entsprechend umfasst dann die zweite Funktion der Komponente eine Funktionalität als Responder, also als Annehmender einer Kommunikationsbeziehung. In dieser Konstellation macht man sich vorteilhaft zu Nutze, dass in einer komplexen Automatisierungsumgebung eine Komponente oft in einen grundsätzlichen Informationsfluss eingebunden ist, wobei beispielsweise ein Informationsfluss vorwiegend von einem Initiator zu einem Responder verlaufen kann, vorteilhaft analog zu einem Materialfluss in einer Fertigung oder einem industriellen Prozess. Selbstverständlich kann auch das Gegenteil per Spezifikation vereinbart werden. Eine weitere vorteilhafte Unterscheidung könnte in die Funktionsgruppen "Master" bzw. "Server" und "Client" bestehen. Die meisten verwendbaren industriellen Kommunikationsprotokolle beruhen darauf, dass es einen "Master" oder "Server" oder "Initiator" einer "Session" gibt, und einen "Client". Dementsprechend kann also die Zweiteilung des Kommunikationsinterfaces vorteilhaft dazu genutzt werden, die Rollen bei den entsprechend verwendeten Kommunikationsprotokollen für die einzelnen Elemente zu bestimmen. Es wird beispielsweise sichergestellt, dass nicht zwei an einer Kommunikationsbeziehung beteiligte Komponenten für ein Element beide als "Master" oder "Initiator" des Datenaustauschs vorgesehen werden.

Vorteilhaft werden zumindest der erste und der zweite Schritt der Projektierung zum Zeitpunkt einer Herstellung oder Programmierung der jeweiligen Komponente durchgeführt. Dies hat zum Hintergrund, dass Komponenten von verschiedenen Herstellern stammen können, es jedoch wichtig ist, dass Kommunikationsinterfaces desselben Typs oder zumindest eines kompatiblen Typs definiert werden. Durch die Verwendung von Kommunikationsinterfaces desselben Typs bereits im Vorfeld werden alle erforderlichen Spezifikationen für den Aufbau von Kommunikationsbeziehungen und für die Durchführung der späteren Kommunikationen festgelegt, was zum einen die Fehleranfälligkeit verringert, andererseits auch eine automatische Verschaltung und Projektierung und die Parametrierung der Kommunikationsbeziehungen vereinfacht. Danach kann der dritte Schritt der Projektierung auch zur Laufzeit der industriellen Automatisierungsanordnung nach Art einer Plug-and-Play-Verbindung durchgeführt werden. Ein Benutzereingriff kann sich dabei oft entweder auf eine Kontrolle beschränken, oder sogar komplett entfallen.

Vorteilhaft wird für jedes Element des Kommunikationsinterfaces eine Datenflussrichtung definiert, wobei in dem häufigen Fall, dass ein Element sowohl der ersten Gruppe als auch als korrespondierendes Element der zweiten Gruppe der Elemente angehört, die Datenflussrichtung für das Element in der ersten Gruppe komplementär ist zu der Datenflussrichtung des selben Elementes in der zweiten Gruppe.

Vorteilhaft wird jedem der Elemente jeweils ein Datentyp zugeordnet, sodass anhand des Datentyps und anhand einer ggf. definierten Kommunikationsart (z.B. geforderte Häufigkeit und Art der Kommunikation, z.B. Polling oder meldungsbasiert) es möglich ist, geeignete Kommunikationsprotokolle und geeignete Kommunikationsparameter für jedes der Elemente separat auszuwählen, vorteilhafterweise vollautomatisch. In einfachen Fällen kann der Datentyp ein elementarer oder ein zusammengesetzter Datentyp sein, wobei dann seitens der Komponenten in deren Variablenhaushalt entsprechende Variablen eines kompatiblen Typs zur Anbindung an die Elemente des Kommunikationsinterfaces vorgesehen werden können. Es ist auch möglich, als Datentyp einen Strukturtyp oder einen Prozedurtyp oder sogar ein Protokoll zu verwenden, wobei das Protokoll beispielsweise einen Kommunikationsablauf nach Art eines "Handshake" definiert. Da für die an einer Kommunikationsbeziehung beteiligten Komponenten ein- und derselbe Typ bzw. zumindest ein kompatibler Typ vorgesehen sein muss, ist der Datentyp der einzelnen Elemente in der Praxis völlig frei bestimmbar und nicht an externe Festlegungen gebunden.

Vorteilhaft kann ein- und dieselbe Komponente eine Mehrzahl Kommunikationsinterfaces verschiedenen Typs aufweisen und diese jeweils zumindest bezüglich einer der beiden Gruppen instanziieren. Dies erlaubt es zum einen, dass eine Komponente mehrere Kommunikationsbeziehungen zu mehreren, auch unterschiedlichen anderen Komponenten aufweisen kann, und zum anderen ist es damit möglich, Komponenten multifunktional auszulegen, wobei je nach derzeitiger Funktionalität ein passendes Teil-Kommunikationsinterface instanziiert wird und mit diesem passenden Kommunikationsinterface zum einen die richtigen Elemente in der richtigen Art und Weise für die Kommunikation vorgesehen werden, und zum anderen ein auf die jeweilige Funktionalität passender Kommunikationspartner ausgewählt werden kann. Vorteilhaft ist es dabei auch möglich, bei einem Kommunikationsinterface beide Gruppen von Elementen gleichzeitig zu instanziieren, wodurch beispielsweise eine Komponente gleichzeitig mit einer Vorgänger- und mit einer Nachfolgerkomponente in einem Maschinenverbund oder dergleichen einheitlich kommunizieren kann. Es kann je nach Protokoll möglich sein, mit einem einmal instanziierten Teil (Gruppe der Elemente) eines Interfaces zeitgleich mehrere Verbindungen zu betreiben. In anderen Fällen kann es erforderlich sein, für jede Kommunikationsbeziehung oder - verbindung ein anderes Interface zu instanziieren. Bei der Instanziierung werden seitens der Komponente alle technischen Vorkehrungen zum Betrieb einer entsprechenden Verbindung getroffen. Das kann die Initialisierung eines (oder mehrerer) Protokollstacks sein, die Anbindung der Elemente and den Variablenhaushalt der Komponente, die technische Einrichtung von Schnittstellen, Bereitstellen von Speicher etc. Diese Vorkehrungen werden vorteilhaft automatisch erstellt, können aber auch explizit vom Anwender projektiert werden.

Vorteilhaft werden bei der Etablierung der Kommunikation und damit mit Abschluss der Projektierung der Kommunikationsbeziehung immer zueinander passende oder gleiche Elemente der jeweiligen Komponenten kommunikativ miteinander verschaltet. Dies kann beispielsweise anhand eines eindeutigen Namens des Elementes oder vorteilhaft anhand einer eindeutigen Identifikationsnummer (Element Identifier) erfolgen. Vorteilhaft ist die Beschreibung des Kommunikationsinterfaces dabei in jeder Komponente in maschinenlesbarer Form gespeichert oder zumindest aus einem externen Datenspeicher (z.B. einem Server oder einer Datenbank) abrufbar, um die Informationen über die Elemente, deren Datentyp, Kommunikationsrichtung, zugelassene Kommunikationsprotokolle, Kommunikationsparameter etc. maschinell auswerten zu können.

Vorteilhaft wird bei der Zuordnung der Elemente die Art oder Häufigkeit der Datenübertragung und das zu verwendende Kommunikationsprotokoll entweder einzeln, gruppenweise oder sogar gesamt für die jeweils einander zugeordneten Elemente festgelegt. Diese Auswahlmöglichkeit macht es zum einen möglich, die Definition des Kommunikationsinterfaces des jeweiligen Typs einfach zu gestalten, beispielsweise durch gruppenweise Zuordnung von Eigenschaften. Andererseits kann durch die feingranulare Bestimmung von Eigenschaften und Erfordernissen (Constraints) die Kommunikationsbeziehung für jedes einzelne Element genau nach jeweiliger Anforderung festgelegt werden.

Vorteilhaft findet im Zuge der Projektierung eine Kompatibilitätsprüfung zunächst anhand des Typs der zu verschaltenden Kommunikationsinterfaces statt. Sofern der Typ des Kommunikationsinterfaces identisch ist, was in vorteilhaften Ausgestaltungen auch anhand von zugeordneten Zertifikaten nachgewiesen werden kann, kann sich die Kompatibilitätsprüfung bezüglich einzelner Elemente sogar erübrigen.

Vorteilhaft können im Zuge der Projektierung der Kommunikationsbeziehungen zwischen einer Vielzahl Komponenten der industriellen Automatisierungsanordnung einem Benutzer Verknüpfungsvorschläge für die Verknüpfung der Komponenten anhand der vorgesehenen oder bereits instanziierten Kommunikationsinterfaces des jeweils gleichen oder eines kompatiblen Typs der jeweiligen Komponenten unterbreitet werden, natürlich anhand der Maßgabe, dass immer ein Kommunikationsinterface-Anteil des ersten Typs mit einem komplementären Kommunikationsinterface-Anteil desselben Typs verknüpft werden müssen, sodass ein Benutzer vorteilhaft nur in Zweifelsfällen, also wenn es keine automatische eindeutige Verknüpfung gibt, eingreifen muss, und anderenfalls in eindeutigen Fällen die Verknüpfung der Komponenten vollautomatisch erfolgt.

In einer vorteilhaften Variante kann, wie bereits geschildert, jede Komponente eine Beschreibung des instanziierbaren oder bereits instanziierten (Teil-)Kommunikationsinterfaces bereithalten. In einer vorteilhaften Ausgestaltung sind die verschiedenen verfügbaren Typen an Kommunikationsinterfaces jedoch systemweit festgelegt und bekannt, sodass es genügt, wenn zu einer Komponente der Typ der verfügbaren, instanziierbaren Kommunikationsinterfaces, vorteilhaft inklusive einer Angabe über den instanziierbaren Teil, bekannt ist oder von dieser Komponente die Typinformation abrufbar ist. Falls das benötigte Interface noch nicht instanziiert ist, kann das Projektierungssystem die Instanziierung bei der jeweiligen Komponente anfordern.

Obwohl ein einfacher Anwendungsfall von Zweierbeziehungen in der Kommunikation ausgeht, sind vorteilhaft auch 1:n, n:1 und m:n - Konstellationen möglich. Mit anderen Worten: es ist möglich, dass ein erster Teil/Gruppe oder Initiator mit mehreren Respondern (zweiter Teil) kommuniziert, und umgekehrt. Darüber hinaus können die Elemente des Initiator-Teils (ersten Teils/Gruppe) teilweise disjunkt zu den Elementen des zweiten Teils/Gruppe sein.

Ein Ausführungsbeispiel des erfindungsgemäßen Verfahrens wird nachfolgend anhand der Zeichnungen erläutert. Das Ausführungsbeispiel dient gleichzeitig der Erläuterung eines erfindungsgemäßen Projektierungssystems.

Dabei zeigen:
- Figur 1: in schematischer Darstellung eine industrielle Automatisierungsanordnung mit einem Portalroboter, zwei Robotern aus Zuführungseinrichtungen für Maschinen und zwei Maschinen,
- Figur 2: ein einfaches Beispiel für ein zweigeteiltes Kommunikationsinterface für eine Maschine,
- Figur 3: die Darstellung der instanziierten Teil-Kommunikationsinterfaces einer Maschine für ein Projektierungssystem, und
- Figur 4: die Benutzeroberfläche eines Projektierungssystems mit den zu verschaltenden Kommunikationsinterfaces.

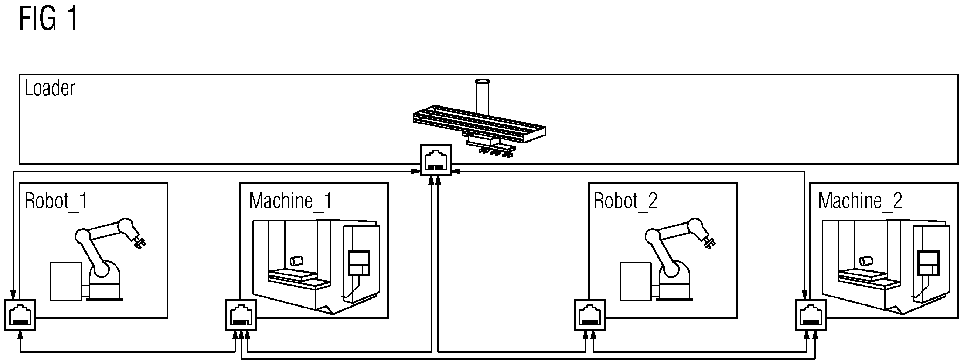

In der Figur 1 ist exemplarisch eine einfache industrielle Automatisierungsanordnung bzw. ein Teil einer solchen gezeigt. Dabei sei angenommen, dass ein Ladeportal, in der Figur mit dem Bezugszeichen "Loader" bezeichnet, eine Automatisierungsstrecke mit Material versorgt und produzierte Güter abtransportiert. Die Fertigungsstrecke besteht aus zwei Maschinen Machine_1, Machine_2, die jeweils von einem Roboter Robot_1, Robot_2 mit Material bestückt werden bzw. mit denen das bearbeitete Material aus den Maschinen Machine_1, Machine_2 entfernt wird. Jede Maschine Machine_1, Machine_2 soll in kommunikativer Beziehung mit ihrem zugeordneten Roboter Robot_1, Robot_2 stehen, zudem sollen alle Roboter Robot_1, Robot_2 und alle Maschinen Machine_1, Machine_2 mit dem Ladeportal Loader in einer Kommunikationsbeziehung stehen. Außerdem soll nach der Projektierung eine Kommunikationsbeziehung zwischen den Maschinen Machine_1, und Machine_2 bestehen. Die notwendigen Kommunikationsbeziehungen sind durch Doppelpfeile dargestellt. Es handelt sich bei den Maschinen Machine_1, Machine_2 also um verkettete Werkzeugmaschinen, wobei in der Figur 1 die Kommunikationsbeziehung zwischen diesen Maschinen Machine_1, Machine_2 und zu einer überlagerten Einheit (Ladeportal Loader) und den Zuführeinrichtungen (Roboter Robot_1, Robot_2) projektiert werden müssen. Diese Kommunikationsprojektierung erfolgt in diesem Fall nachgelagert, d.h. nachdem die einzelnen Komponenten (Maschinen/Einheiten/Roboter...) bereits in Betrieb genommen sind.

Obwohl das vorliegende Ausführungsbeispiel sich an Werkzeugmaschinen, Roboter und andere Komponenten einer industriellen Fertigung orientiert, kann die hiermit erläuterte Erfindung selbstverständlich für jegliche informationstechnischen und industrielle Komponenten verwendet werden, insbesondere auch in der Prozesstechnik.

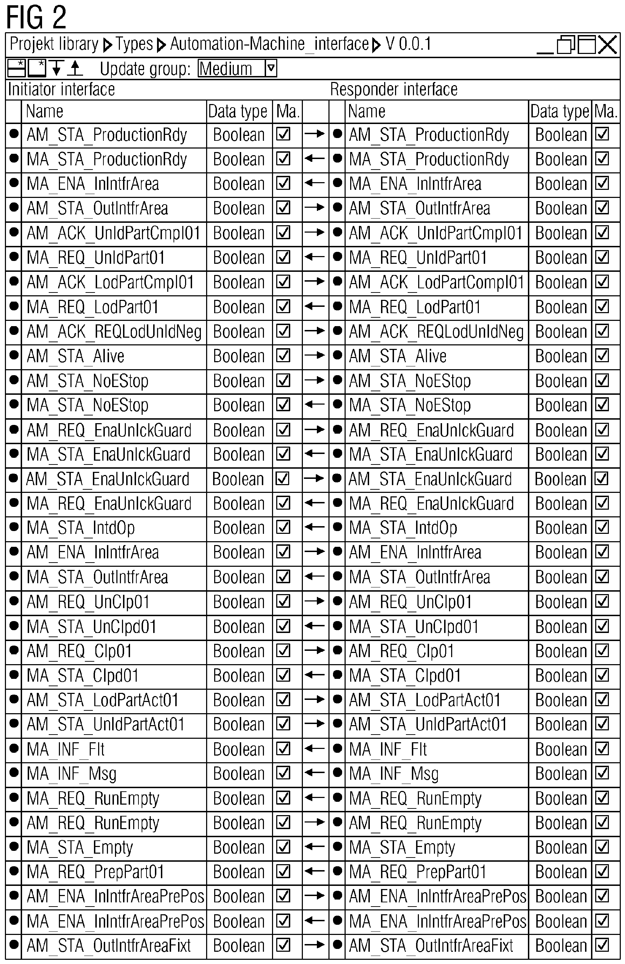

Die Figur 2 zeigt exemplarisch ein einfaches Beispiel für ein zweigeteiltes Kommunikationsinterface eines hier verwendeten Typs. Mit dem hier definierten Kommunikationsinterface wird gleichzeitig sowohl das Kommunikationsinterface definiert, welches auf einer ersten Komponente, die an einer Kommunikationsbeziehung beteiligt sein soll, instanziiert wird, als auch einen zweiten Teil, der auf der kommunikativ verbundenen anderen Komponente instanziiert werden muss. Dazu ist auf der linken Seite der Darstellung ein erster Teil, das sogenannte "Initiator-Interface" dargestellt, mit entsprechend einer ersten Gruppe Elemente, die in der Figur 2 jeweils mit einem Namen, einem Datentyp, einer Information darüber, ob das Element verpflichtend an einer Kommunikation beteiligt sein muss, und einer Kommunikationsrichtung (Eingangsvariable, Ausgangsvariable) versehen ist, wobei letztere Information anhand eines Pfeils (nach rechts oder nach links) dargestellt ist. Weitere, in der Darstellung des Interfaces allerdings nicht sichtbare Informationen, können beispielsweise eine Häufigkeit einer Kommunikation, eine Kommunikationsart (push, poll, synchron, asynchron, ...) und weitere Parameter definieren. Diese weiteren Parameter können beispielsweise durch "Rechtsklick" mit einem Zeiger (Mauszeiger) auf das entsprechende Element erreicht werden.

Entsprechend der auf der linken Seite dargestellten Elemente der ersten Gruppe (hier als Initiator interface bezeichnet) sind auf der rechten Seite die korrespondierenden Elemente der zweiten Gruppe (hier: Responder-Interface) definiert, wobei im vorliegenden Fall eine 1:1-Zuordnung der Elemente der beiden Gruppen gegeben ist. In anderen Ausführungsbeispielen kann es auch andere Relationen zwischen den Elementen geben. Im vorliegenden Ausführungsbeispiel sind zur Vereinfachung auch nur Boolesche Variablen (Data type: Boolean) gezeigt; andere Datentypen und auch Protokolle, Abläufe etc. können hier jedoch gleichfalls definiert sein. Das Beispiel der Figur 2 zeigt ein Kommunikationsinterface, welches für die Kommunikation zwischen einer speicherprogrammierbaren Steuerung ("Automation") und einer Werkzeugmaschine ("Machine") gedacht ist. Die Namen der entsprechenden Elemente für die Kommunikation haben daher einen Präfix "AM" ("Automation" - für speicherprogrammierbare Steuerung) oder "MA" ("Machine" - für die Werkzeugmaschine). Weitere Namensbestandteile sind hier ebenfalls sinnfällige Abkürzungen, beispielsweise "STA" für Status, "ACK" für Acknowledge (Quittierung), "REQ" für Request (Abfrage), "Rdy" für Ready (Bereit) etc. Dies ist hier eine praktische Konvention, die allerdings nicht zwingend umgesetzt werden muss.

Während zur Vereinfachung für einen menschlichen Benutzer die Namen der Elemente sinnvolle Abkürzungen und Akronyme beinhalten, kann insbesondere für die Verarbeitung auf Maschinenebene im Hintergrund für jedes Element eine eindeutige Identifizierungsnummer oder ein sogenanntes "Handle" zugeordnet sein. Gleiches gilt für die Typbezeichnung (hier: Automation-Machine-interfaceInterface V 0.0.1") des Kommunikationsinterfaces, die in der Kopfzeile des dargestellten Informationsblockes sichtbar ist. Diese kann insbesondere im Hintergrund als eine andere maschinenlesbare, systemweit eindeutige Typbezeichnung ausgeführt sein.

Während also in der Abbildung der Figur 2 eine relativ einfache Beziehung zwischen den Elementen dargestellt ist (beispielsweise entsprechen ausgehende Elemente im Initiator-Teil den eingehenden Elementen im Responder-Teil), können in der Praxis auch komplexere Beziehungen (Strukturen, Handshake-Verfahren, etc.) auftreten. Diese können durch semantische Anreicherungen, beispielsweise in JSON-LD, ausgedrückt werden. Wesentlich ist, dass diese Interfacetypen allen beteiligten Maschinen- und Roboterherstellern zur Verfügung gestellt werden, also für alle möglicherweise zu verknüpfenden Komponenten verbindlich sind.

Bei der Verwendung (Instanziierung) des Typs des Kommunikationsinterfaces wird von Maschinen- oder Roboterhersteller jeweils aufgrund der Maschinen- oder Roboterfunktion entschieden, ob der erste Teil oder der zweite Teil des Interfaces (Initiator- oder Responderteil, erste oder zweite Gruppe von Elementen) instanziiert werden soll. Dieser Schritt wird während der Erstellung der Maschinen bzw. Roboter oder Steuerung durchgeführt. In anderen Fällen kann es sinnvoll sein, beide Teile des Kommunikationsinterfaces zu instanziieren.

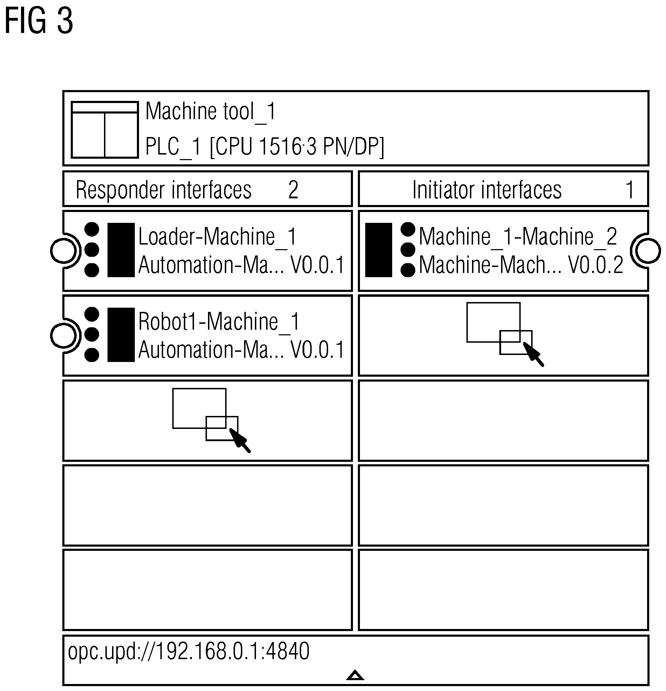

Während, wie bereits erläutert, die beiden Teile eines Kommunikationsinterfaces auf unterschiedlichen Komponenten instanziiert werden sollen, kann auch in ein- und derselben Maschine oder Roboter der Initiator- und der Responderteil des Kommunikationsinterfaces instanziiert werden. Dies ist für die direkten Kommunikationsbeziehungen zwischen Maschinen typisch; möglich wäre das in einem modifizierten Beispiel aus der Figur 1 zwischen den beiden Maschinen Machine_1, Machine_2. In einer Kette von Maschinen, beispielweise Werkzeugmaschinen, kann beispielsweise der Responder-Teil für die Vorgängermaschine und der Initiator-Teil für die Nachfolgermaschine, jeweils bezogen auf die Materialflussrichtung, instanziiert werden. Es ist sehr häufig erforderlich, dass mehrere Kommunikationsinterfaces bzw. Teile davon unterschiedlichen Typs in einer Maschine, Roboter oder Steuerung instanziiert werden; dies ist auch in der Figur 3 sichtbar.

Die Figur 3 zeigt entsprechend einen graphisch verbindbaren Block für ein Projektierungssystem, wobei der Block "Machine Tool_1" die instanziierten Teil-Kommunikationsinterfaces der aus der Figur 1 bekannten Maschine Machine_1 bzw. konkreter der Speicherprogrammierbaren Steuerung PLC_1, die zur Steuerung der Maschine Machine_1 verwendet wird, darstellt. Die damit dargestellte Maschine Machine_1 weist zwei instanziierte Responder-Interfaces (linker Teil der Darstellung) und ein instanziiertes Initiator-Interface (rechte Seite) auf. Die "Responder-Interfaces", die auf der linken Seite der Figur 3 abgebildet sind, können beispielsweise bezogen auf die Figur 1 und dort die Maschine Machine_1 für die Kommunikationsverbindungen mit dem Roboter Robot_1 und dem Ladeportal Loader (ebenfalls eine Art Roboter) vorgesehen sein, während das Kommunikationsinterface der zweiten Elementen-Gruppe (Initiator-Interface), welches auf der rechten Seite der Figur 3 abgebildet ist, die Kommunikationsbeziehung der Maschine Machine_1 zu ihrer in Materialflussrichtung nachfolgenden Maschine Machine_2 ermöglichen soll. An den dargestellten Teil-Kommunikationsinterfaces (Responder-Interfaces, Initiator-Interface) sind jeweils kreisförmige Symbole dargestellt, die in einer manuellen oder automatischen graphischen Verschaltung des jeweils dargestellten Teil-Kommunikationsinterfaces auf einer Benutzeroberfläche des Projektierungssystems als Angriffspunkt für Verbindungslinien dienen können. Eine Verbindungslinie repräsentiert dann jeweils eine projektierte Kommunikationsbeziehung, die anschließend vom Projektierungssystem im Hintergrund durch Parametrierung der Komponenten realisiert wird.

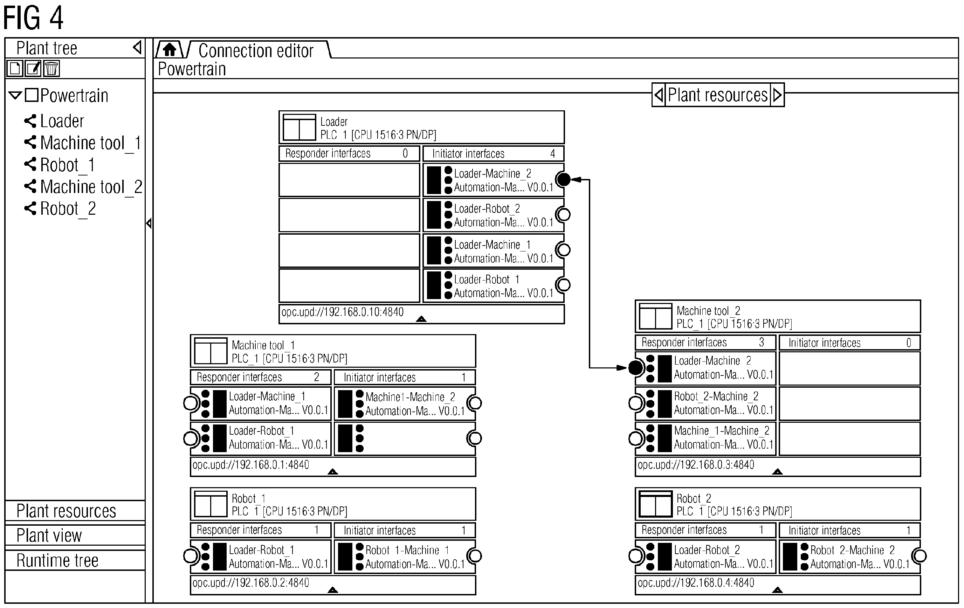

Die Figur 4 zeigt eine entsprechende Benutzeroberfläche des Projektierungssystems, wobei auf einer Arbeitsoberfläche "Connection editor" die Teil-Kommunikationsinterfaces miteinander verknüpft bzw. verschaltet werden können, wodurch die Kommunikationsbeziehung projektiert wird. Dort ist auch der anhand der Figur 3 exemplarisch erläuterte Block "Machine Tool_1" der Maschine Machine_1 dargestellt; entsprechend ist der Block "Machinetool_2" zur Verschaltung der Maschine Machine_2 aus der Figur 1 vorgesehen. Ebenso sind die Blöcke "Loader", "Robot_1" und "Robot_2" zur Projektierung der Kommunikationsbeziehungen der entsprechend benannten Roboter aus der Figur 1 vorhanden. Auf der Arbeitsfläche, die in der Figur 4 dargestellt ist, ist bereits anhand einer doppelpfeilförmigen Verbindungslinie eine Kommunikationsbeziehung etabliert, nämlich zwischen dem Ladeportal Loader (Block oben Mitte in der Figur) und der zweiten Maschine ("Machine Tool_2"); deren Block ist rechts (oberer Block) dargestellt. Man sieht, dass von dem Kommunikationsblock des Ladeportals Loader das Initiator-Interface mit den Namen "Loader-Machine_2" mit dem gleichnamigen Responder-Kommunikationsinterface der Maschine (Kommunikationsblock Machine Tool_2) verknüpft worden ist. Da dies die einzigen zueinander kompatiblen und mit dem Namen "Loader-Machine_2" bezeichneten Teil-Interfaces der Anordnung sind und von diesem Typ des Kommunikationsinterfaces jeweils eine Instanz der ersten Gruppe (Initiator-Interface) und eine Instanz der zweiten Gruppe (Responder-Interface) instanziiert ist, konnte diese Verknüpfung sogar vollautomatisch etabliert werden. Weitere automatisch mögliche Verknüpfungen sind das Kommunikationsinterface Loader-Robot_2 und auch das Kommunikationsinterface Loader-Robot_1 sowie die Kommunikationsbeziehung Loader-Machine_1, womit alle Kommunikationsinterfaces des Ladeportals "Loader" automatisch etabliert werden können. Gleiches gilt für die noch nicht verknüpften Kommunikationsbeziehungen der Maschine Machine_1, der in der Figur 4 der Block Machine Tool_1 zugeordnet ist, und entsprechend der Maschine Machine_2 (Block: Machine Tool_2) und die Kommunikationsblöcke Roboter Robot_1, Robot_2. Es können also alle Kommunikationsbeziehungen und -verbindungen vollautomatisch projektiert werden, wenn wie in der Figur 4 dargestellt für die beteiligten Komponenten die richtigen Teil-Kommunikationsinterfaces instanziiert sind.

Für alle diese zu etablierenden Kommunikationsbeziehungen gilt, dass der Initiator und der Responder von demselben Interfacetyp erzeugt worden sind, wodurch das System (Projektierungssystem) eine Kompatibilitätsprüfung auf Interfaceebene und statt auf Einzelelementebene durchführen kann und dem Anwender entsprechende Verschaltungsvorschläge geben kann; anhand der Figur 4 wurde bereits erläutert, dass anstelle der Vorschläge bei Eindeutigkeit auch sogleich die entsprechenden Kommunikationsbeziehungen geknüpft werden können. Dies ist auch bei vielen zunächst nicht-eindeutigen Fällen durch Einbeziehung weiterer Informationen (z.B. Topologie oder funktionale Beschreibungen der Komponenten) möglich. Wenn die Interfaceinformationen auch zur Laufzeit erfragbar sind (z.B. über das Kommunikationsprotokoll OPC UA), kann ein sogenanntes "Plug-and-Play" auch ohne manuelle oder explizite Projektierung durchgeführt werden. Dies bedeutet, dass ein Manueller Schritt unter Verwendung der in Figur 4 dargestellten Benutzeroberfläche zugunsten eines Hintergrundprozesses entfällt und das Projektierungssystem als ein Dienst im Netz ausgeführt ist. Dieser Dienst kann sogar als Software-Anwendung auf einer (oder mehreren) der Komponenten verfügbar sein, so dass sich die zu verbindenden Komponenten gegenseitig auffinden und miteinander verknüpfen können.

Durch die Definition eines gemeinsamen Interface-Typs für beide Seiten einer Kommunikationsbeziehung (z.B. Initiator-Responder, Master-Slave, Client-Server oder dergleichen) ist bei der Instanziierung der einzelnen Seiten des Interfaces auf unterschiedlichen Komponenten der semantische Kontakt zwischen den Kommunikationspartnern bekannt und kann systemgestützt ausgewertet werden.

## Patentansprüche

1. Verfahren zur computergestützten Projektierung einer Kommunikationsbeziehung zwischen zumindest zwei Komponenten (Robot_1, Robot_2, Machine_1, Machine_2, Loader) einer industriellen Automatisierungsordnung,
wobei mit der Projektierung die bei einem Datenaustausch miteinander zu verknüpfenden Komponenten (Robot_1, Robot_2, Machine_1, Machine_2, Loader) und die datentechnischen Elemente der Kommunikationsbeziehung festgelegt werden,
**dadurch gekennzeichnet,**
**dass**
in einem ersten Schritt zumindest ein Kommunikationsinterface eines Typs mit den für die Kommunikation vorgesehenen Elementen festgelegt wird, wobei das Kommunikationsinterface diesen Typs eine erste Gruppe Elemente für erste Funktionen umfasst, und/oder wobei das Kommunikationsinterface diesen Typs eine zweite Gruppe Elemente für zweite Funktionen umfasst,
**dass** in einem zweiten Schritt für jede der Komponenten (Robot_1, Robot_2, Machine_1, Machine_2, Loader) jeweils zumindest die erste oder die zweite Gruppe Elemente des Kommunikationsinterfaces instanziiert wird, und
**dass** in einem dritten Schritt jeweils Elemente der ersten Gruppe des Kommunikationsinterfaces einer ersten der zwei Komponenten (Robot_1, Robot_2, Machine_1, Machine_2, Loader) mit korrespondierenden Elementen der zweiten Gruppe des Kommunikationsinterfaces desselben Typs einer zweiten der Komponenten (Robot_1, Robot_2, Machine_1, Machine_2, Loader) verknüpft werden.

2. Verfahren nach Patentanspruch 1,
**dadurch gekennzeichnet,**
**dass** die erste Funktion der Komponente (Robot_1, Robot_2, Machine_1, Machine_2, Loader) eine Funktionalität als Initiator der Kommunikationsbeziehung umfasst, und dass die zweite Funktion der Komponente (Robot_1, Robot_2, Machine_1, Machine_2, Loader) eine Funktionalität als Responder der Kommunikationsbeziehung umfasst.

3. Verfahren nach einem der vorhergehenden Patentansprüche,
**dadurch gekennzeichnet,**
**dass** zumindest der erste und der zweite Schritt der Projektierung spätestens zum Zeitpunkt einer Herstellung oder Programmierung der jeweiligen Komponente (Robot_1, Robot_2, Machine_1, Machine_2, Loader) durchgeführt wird.

4. Verfahren nach einem der vorhergehenden Patentansprüche,
**dadurch gekennzeichnet,**
**dass** der dritte Schritt der Projektierung zur Laufzeit der industriellen Automatisierungsanordnung nach Art einer Plug-And-Play-Verbindung durchgeführt wird.

5. Verfahren nach einem der vorhergehenden Patentansprüche,
**dadurch gekennzeichnet,**
**dass** für jedes Element eine Datenflussrichtung definiert wird, wobei in dem Fall, dass ein Element sowohl der ersten Gruppe als auch als korrespondierendes Element der zweiten Gruppe der Elemente angehört, die Datenflussrichtung für das Element in der ersten Gruppe komplementär ist zu der Datenflussrichtung desselben Elementes in der zweiten Gruppe.

6. Verfahren nach einem der vorhergehenden Patentansprüche,
**dadurch gekennzeichnet,**
**dass** jedem der Elemente jeweils ein Datentyp zugeordnet wird.

7. Verfahren nach Patentanspruch 6,
**dadurch gekennzeichnet,**
**dass** als der Datentyp ein elementarer oder ein zusammengesetzter Datentyp verwendet wird.

8. Verfahren nach Patentanspruch 6 oder 7,
**dadurch gekennzeichnet,**
**dass** als der Datentyp ein Strukturtyp oder ein Prozedurtyp oder ein Protokoll verwendet wird.

9. Verfahren nach einem der vorhergehenden Patentansprüche,
**dadurch gekennzeichnet,**
**dass** ein- und dieselbe Komponente (Robot_1, Robot_2, Machine_1, Machine_2, Loader) eine Mehrzahl Kommunikationsinterfaces verschiedenen Typs aufweist und diese jeweils zumindest bezüglich einer der Gruppen instanziiert werden.

10. Verfahren nach einem der vorhergehenden Patentansprüche,
**dadurch gekennzeichnet,**
**dass** in einer Komponente (Robot_1, Robot_2, Machine_1, Machine_2, Loader) sowohl die erste Gruppe als auch die zweite Gruppe Elemente des Kommunikationsinterfaces desselben Typs instanziiert wird.

11. Verfahren nach einem der vorhergehenden Patentansprüche,
**dadurch gekennzeichnet,**
**dass** bei der Verknüpfung Elemente der ersten Gruppe der ersten Komponente (Robot_1, Robot_2, Machine_1, Machine_2, Loader) den entsprechenden Elementen der zweiten Gruppe der zweiten Komponente (Robot_1, Robot_2, Machine_1, Machine_2, Loader) zugeordnet werden.

12. Verfahren nach Patentanspruch 11,
**dadurch gekennzeichnet,**
**dass** bei der Zuordnung die Art oder Häufigkeit der Datenübertragung und das zu verwendende Kommunikationsprotokoll einzeln, gruppenweise oder gesamt für die jeweils einander zugeordneten Elemente festgelegt werden.

13. Verfahren nach einem der vorhergehenden Patentansprüche,
**dadurch gekennzeichnet,**
**dass** im Zuge der Projektierung eine Kompatibilitätsprüfung anhand des Typs der zu verschalteten Kommunikationsinterfaces durchgeführt wird.

14. Verfahren nach einem der vorhergehenden Patentansprüche,
**dadurch gekennzeichnet,**
**dass** im Zuge der Projektierung der Kommunikationsbeziehungen zwischen einer Vielzahl Komponenten (Robot_1, Robot_2, Machine_1, Machine_2, Loader) der industriellen Automatisierungsanordnung einem Benutzer Verknüpfungsvorschläge für die Verknüpfung der Komponenten (Robot_1, Robot_2, Machine_1, Machine_2, Loader) anhand der vorgesehenen oder instanziierten Kommunikationsinterfaces des jeweils gleichen oder eines kompatiblen Typs der jeweiligen Komponenten (Robot_1, Robot_2, Machine_1, Machine_2, Loader) unterbreitet werden und/oder die Verknüpfung der Komponenten (Robot_1, Robot_2, Machine_1, Machine_2, Loader) anhand der vorgesehenen oder instanziierten Kommunikationsinterfaces des jeweils gleichen oder eines kompatiblen Typs der jeweiligen Komponenten (Robot_1, Robot_2, Machine_1, Machine_2, Loader) automatisch erfolgt.

15. Verfahren nach einem der vorhergehenden Patentansprüche,
**dadurch gekennzeichnet,**
**dass** die für die Projektierung benötigten Beschreibung des Kommunikationsinterfaces und/oder eine Typinformation des Kommunikationsinterfaces von der jeweiligen Komponente (Robot_1, Robot_2, Machine_1, Machine_2, Loader) abgerufen wird.

16. Projektierungssystem zur computergestützten Projektierung einer Kommunikationsbeziehung zwischen zumindest zwei Komponenten einer industriellen Automatisierungsordnung,
wobei das Projektierungssystem zur Festlegung der bei einem Datenaustausch miteinander zu verknüpfenden datentechnischen Elemente der Kommunikationsbeziehung eingerichtet ist,
**dadurch gekennzeichnet,**
**dass** das Projektierungssystem derart eingerichtet ist, dass in einem ersten Schritt zumindest ein Kommunikationsinterface eines Typs mit den für die Kommunikation vorgesehenen Elementen festgelegt wird, wobei das Kommunikationsinterface diesen Typs eine erste Gruppe Elemente für erste Funktionen umfasst, und/oder wobei das Kommunikationsinterface diesen Typs eine zweite Gruppe Elemente für zweite Funktionen umfasst,
**dass** in einem zweiten Schritt für jede der Komponenten jeweils zumindest die erste oder die zweite Gruppe Elemente des Kommunikationsinterfaces instanziiert wird, und
**dass** in einem dritten Schritt jeweils Elemente der ersten Gruppe des Kommunikationsinterfaces einer ersten der zwei Komponenten mit korrespondierenden Elementen der zweiten Gruppe des Kommunikationsinterfaces desselben Typs einer zweiten der Komponenten verknüpft werden.
